Europäisches Patentamt

European Patent Office

Office européen des brevets

(11) Numéro de publication: **0 143 325**
A1

(12) **DEMANDE DE BREVET EUROPEEN**

(21) Numéro de dépôt: **84112746.7**

(22) Date de dépôt: **23.10.84**

(51) Int. Cl.⁴: **C 04 B 38/00,** B 01 D 39/20,
B 01 D 13/04

(30) Priorité: **25.10.83 FR 8316975**

(43) Date de publication de la demande: **05.06.85**
**Bulletin 85/23**

(84) Etats contractants désignés: **BE CH DE FR GB IT LI NL
SE**

(71) Demandeur: **CERAVER Société anonyme dite:, 12, rue
de la Baume, F-75008 Paris (FR)**

(72) Inventeur: **Auriol, Alain, 21, Chemin de l'Ormeau,
F-65000 Tarbes (FR)**
Inventeur: **Gillot, Jacques, 5 Impasse de la Hount Odos,
F-65310 Laloubere (FR)**

(74) Mandataire: **Weinmiller, Jürgen et al, Zeppelinstrasse 63,
D-8000 München 80 (DE)**

(54) **Matériau poreux et filtre tubulaire constitué en ce matériau.**

(57) Matériau poreux formé de particules minérales frittées.
Il présente une porosité ouverte de 30 à 40% en volume, une perméabilité à l'eau à 20°C variant de 0,6 à 60 m³/h·m²·bar pour une épaisseur de paroi de 1 cm lorsque le diamètre moyen de pores varie de 2 à 20 microns et une résistance à l'écrasement, mesurée dans des conditions de compression isostatique, de $4 \cdot 10^8$ à $5 \cdot 10^8$ N/m².

## Matériau poreux et filtre tubulaire constitué en ce matériau

La présente invention concerne un matériau poreux formé de particules minérales frittées, ainsi qu'un filtre tubulaire constitué en ce matériau, convenant notamment pour la filtration des liquides et des gaz.

On a déjà proposé des milieux filtrants de ce genre, mais ils manifestent généralement une efficacité relativement faible, car, s'ils présentent une perméabilité élevée aux fluides, ils ne peuvent résister à la perte de charge relativement élevée qui serait nécessaire pour procurer un débit important par unité de surface filtrante, ou pour permettre la récupération du matériau solide rassemblé sur la surface filtrante, en exerçant une pression dans le sens opposé à celui de l'écoulement du fluide en cours de filtration. Ils ne peuvent non plus résister de façon satisfaisante aux contraintes mécaniques ou thermomécaniques élevées qui apparaissent souvent pendant leur montage et leur fonctionnement. S'ils sont fabriqués en une épaisseur suffisante pour résister à des contraintes mécaniques élevées, ceci implique une faible perméabilité, donc une faible efficacité.

Un but de la présente invention est donc de procurer un matériau poreux présentant à la fois une perméabilité élevée et une résistance élevée aux contraintes mécaniques et thermomécaniques, utilisable dans la fabrication de filtres mécaniquement résistants et d'efficacité élevée.

Le matériau poreux selon l'invention est caractérisé en ce qu'il présente une porosité ouverte de 30 à 40% en volume et une résistance à l'écrasement, mesurée dans des conditions de compression isostatique, de $4.10^8$ à $5.10^8$ $N/m^2$.

Il répond en outre de préférence à au moins l'une des caractéristiques suivantes :

- Sa résistance à la flexion est comprise entre 2,5 et $3,5.10^7$ $N/m^2$.

- Le diamètre moyen de ses pores est compris entre 2 et 20 microns.

- Il présente une perméabilité à l'eau à 20°C allant de 0,6 à 60 $m^3/h.m^2$. bar pour une épaisseur de paroi de 1 cm lorsque le diamètre moyen de pore passe de 2 à 20 microns.

- Il est composé d'un mélange d'oxydes métalliques comprenant plus de 20% en poids d'alumine.

- Il est constitué d'alumine de pureté au moins égale à 99,9% en poids.

Le filtre tubulaire selon l'invention est caractérisé en ce qu'il comprend une couche épaisse poreuse formant couche-support en un matériau tel que défini précédemment, ainsi qu'au moins une couche filtrante mince poreuse formée formée de particules minérales frittées entre elles et avec les surfaces interne ou externe de la couche support, les pores de la couche filtrante étant de diamètre inférieur à 10 microns et plus fins que ceux de la couche-support, l'épaisseur radiale de chaque couche filtrante ne dépassant pas quelques dizaines de microns.

Il répond en outre de préférence à au moins l'une des caractéristiques ci-dessous :

- Le diamètre moyen de pore de la couche présentant les pores les plus fins est d'environ 0,2 micron.

- La couche support comprend au moins deux sous-couches de diamètres de pores différents, réunies par frittage, la sous-couche présentant les pores les plus fins étant disposée entre la ou les couches filtrantes et l'autre sous-couche.

- Le rapport de son diamètre externe à son épaisseur radiale est compris entre 4 et 20.

- Sa résistance à la pression interne passe de 30 bars à 240 bars lorsque le rapport du diamètre externe à l'épaisseur radiale passe de 20 à 4.

Il est décrit ci-après, à titre d'exemple, la préparation et les principales propriétés physiques et mécaniques de filtres tubulaires selon l'invention.

EXEMPLE 1

On prépare une pâte constituée d'un mélange de :

- 40 % d'alumine électrofondue d'une dimension moyenne de grains de 29 microns,

- 30% d'alumine électrofondue d'une dimension moyenne de grains de 17 microns,

- 30% d'alumine ayant une dimension moyenne de grains de 2,5 microns,

- 9% de vaseline technique,

- 16% d'un gel aqueux, constitué de 1,5% de méthyl-hydroxypropyl cellu-

- 3 -

0143325

lose et 14,5% d'eau.

Ces quantités sont exprimées en pourcentage pondéral par rapport à l'alumine sèche.

La pâte ainsi préparée est extrudée sous une pression de 120 bars sous forme de tubes d'un diamètre de 20 mm et d'une épaisseur de 2 mm.

On sèche ensuite les tubes de façon à éliminer les liants organiques et on les cuit en atmosphère réductrice à 1800°C. On obtient des tubes poreux ayant les caractéristiques suivantes :

- diamètre extérieur : 19 mm
- épaisseur : 2 mm
- porosité : environ 35 vol %
- diamètre de pores moyen : 12 microns
- perméabilité à l'air à 20°C, 1 atm : 10 000 $Nm^3/h.m^2.bar$
- perméabilité à l'eau mesurée à 20°C : 120 $m^3/h.m^2.bar$
- résistance à la compression isostatique : $450.10^6$ $N/m^2$
- résistance à la flexion : $30.10^6$ $N/m^2$
- résistance à la pression interne : 70 bars = $7.10^6$ $N/m^2$

La résistance à l'écrasement des tubes est mesurée comme suit. On enveloppe dans une membrane souple étanche les surfaces intérieure et extérieure du tube. On soumet l'ensemble à une compression isostatique dans un liquide. La résistance à la compression isostatique est la pression isostatique maximale que le tube peut supporter sans être endommagé en aucun point.

La résistance à la flexion se mesure par la méthode connue de mise en flexion au moyen de 4 points d'appui. Les équations connues de calcul des poutres permettent de calculer la contrainte pour laquelle se produit la rupture du tube.

La résistance à la pression interne (ou à l'éclatement) se mesure en introduisant dans le tube une membrane souple étanche tubulaire. On introduit dans cette membrane un liquide sous pression, dont on augmente la pression jusqu'à éclatement du tube.

EXEMPLE 2

On prépare une couche-support tubulaire comme indiqué dans l'exemple 1. Pour déposer sur la surface intérieure de ce tube une couche filtrante d'un diamètre moyen de pores de 1,2 micron, on procède comme suit :

On prépare une barbotine ayant la composition suivante :

- alumine d'un diamètre moyen de grains 2,5 microns (mesuré après broyage de la barbotine) : 8 % en masse.

- eau additionnée de polyéthylène glycol(Carbowax 4000C de UNION CARBIDE) jusqu'à obtenir une viscosité de 5 poises : 91,8 %

- tensioactif "DARVAN C" de la firme POLYPLASTIC : 0,2 %

On soumet cette barbotine à un broyage de 24 heures dans un broyeur à billes d'une contenance de 25 litres chargé de :

- 25 kg de billes d'alumine d'un diamètre de 10 mm,

- 7 litres de barbotine,

cette opération ayant pour but essentiel de rompre les agglomérats de grains et de bien disperser les particules.

On remplit de cette barbotine le tube préparé précédemment, puis on le vide par gravité. Il reste sur la surface intérieure du tube un film de barbotine qu'on sèche et qu'on soumet à une cuisson oxydante à 1550°C, ce qui forme une couche d'épaisseur 20 à 30 microns ayant un diamètre moyen de pores de 1,2 micron.

Le tube filtre ainsi obtenu possède les caractéristiques suivantes :

- diamètre extérieur : 19 mm,

- épaisseur : 2 mm,

- porosité de la couche-support : 35 %,

- diamètre moyen des pores de la couche-support : 12 microns,

- épaisseur de la couche filtrante : environ 20 microns,

- diamètre moyen des pores de la couche filtrante : 1,2 micron,

- porosité de la couche filtrante : environ 30 %,

- perméabilité à l'air mesurée à 20°C, 1 atm : 4500 $Nm^3/h.m^2.bar$,

- perméabilité à l'eau mesurée à 20°C : 40 $m^3/h.m^2.bar$,

- résistance à la compression isostatique : $450.10^6$ $N/m^2$,

- résistance à la flexion : $30.10^6$ $N/m^2$,

- résistance à la pression interne : 70 bars = $7.10^6$ $N/m^2$.

EXEMPLE 3

On prépare une couche-support tubulaire comme indiqué dans l'exemple numéro 1. Pour déposer sur la surface intérieure de ce tube une couche filtrante double comprenant une première couche en alumine d'un diamètre moyen de pores de 1,2 micron puis une deuxième couche en dioxyde de titane d'un diamètre moyen de pores de 0,2 micron, on procède comme suit :

- on dépose la première couche filtrante comme indiqué dans l'exemple 2 ;

- on dépose ensuite la deuxième couche filtrante par la même méthode, mais en utilisant une barbotine de composition suivante :

- dioxyde de titane (sous forme rutile) d'un diamètre moyen de particules de 0,2 micron : 5 % en masse,

- eau additionnée de polyéthylène glycol (Carbowax 4000 C de UNION CARBIDE) jusqu'à obtenir une viscosité de 5 poises : 94,8 %

- tensioactif "DARVAN C" de la firme Polyplastic : 0,2 % ;

et en limitant la température de cuisson à 1000°C.

Le tube-filtre ainsi obtenu possède les caractéristiques suivantes :

- diamètre extérieur : 19 mm,

- épaisseur : 2 mm,

- porosité de la couche-support : 35 %,

- diamètre moyen des pores de la couche-support : 12 microns,

- épaisseurs des couches filtrantes : 1ère couche : environ 20 microns,

: 2ème couche : environ 10 microns,

- diamètre moyen des pores de la couche filtrante la plus fine : 0,2 micron,

- porosité des deux couches filtrantes : environ 30 %,

- perméabilité à l'air mesurée à 20° C, 1 atm : 1000 $Nm^3/h.m^2.bar$,

- perméabilité à l'eau mesurée à 20°C : $3m^3/h.m^2.bar$,

- résistance à la compression isostatique : $450.10^6 \ N/m^2$,

- résistance à la flexion : $30.10^6 \ N/m^2$,

- résistance à la pression interne : 70 bars = $7.10^6 \ N/m^2$.

EXEMPLE 4

On réalise un tube filtre comportant une couche-support identique à celle de l'exemple 3 et deux couches filtrantes identiques à celles de l'exemple 3, mais disposées sur la surface extérieure du tube-support.

0143325

Pour cela, on procède comme dans l'exemple 3, à la différence près que la dépose des couches filtrantes s'opère par immersion du tube dans la barbotine, puis égouttage.

On otbient un tube-filtre ayant les mêmes caractéristiques que le tube-filtre de l'exemple 3, sauf en ce qui concerne :

- la position des couches filtrantes, qui sont situées sur la surface extérieure du tube-filtre,

- les perméabilités à l'air et à l'eau, qui sont augmentées dans un rapport voisin de 1,25 (rapport entre les diamètres et par suite les aires des couches filtrantes).

EXEMPLE 5

On réalise un tube filtre analogue à celui de l'exemple 2, sauf en ce qui concerne la couche-support qui est formée de deux sous-couches de diamètres moyens de pores différents.

Pour cela on prépare deux pâtes céramiques :

- la première pâte est identique à celle de l'exemple 1,

- la deuxième pâte n'en diffère que par la granulométrie des différentes fractions d'alumine qui la constituent :

- 25% d'alumine électrofondue d'une dimension moyenne de grains de 23 microns,

- 45% d'alumine électrofondue d'une dimension moyenne de grains de 13 microns,

- 30% d'alumine calcinée d'une dimension moyenne de grains de 2,5 microns.

Les pâtes ainsi préparées sont coextrudées coaxialement de manière à former un tube d'un diamètre de 20 mm et d'une épaisseur de 2 mm, formé d'une couche extérieure de la première pâte et d'une couche intérieure de la deuxième pâte, ces couches ayant approximativement la même épaisseur.

Après séchage et cuisson comme dans l'exemple 1, et dépose d'une couche filtrante comme dans l'exemple 2, on obtient un tube-filtre qui possède les caractéristiques suivantes :

- diamètre extérieur : 19 mm,

- épaisseur : 2 mm,

- diamètre moyen des pores de la couche support : 1ère sous-couche : 12 microns,
: 2ème sous-couche :  9 microns,

- porosité de la couche-support : 1ère sous couche : 35 %,

                       : 2ème sous-couche : 32 %,

- épaisseur de la couche filtrante : environ 20 microns,

- diamètre moyen des pores de la couche filtrante : 1,2 micron,

- porosité de la couche filtrante : environ 30 %,

- perméabilité à l'air mesurée à 20°C, 1 atm : 4000 $Nm^3/h.m^2.bar$,

- perméabilité à l'eau mesurée à 20°C : 37 $m^3/h.m^2.bar$,

- résistance à la compression isostatique : $450.10^6$ $N/m^2$,

- résistance à la pression interne : 80 bars = $8.10^6$ $N/m^2$.

La résistance à la pression interne est plus élevée que dans les exemples 1 à 4 car c'est la couche intérieure du support qui supporte la pression la plus élevée et le matériau de cette couche intérieure est ici plus résistant que celui de la couche extérieure.

REVENDICATIONS

1/ Matériau poreux formé de particules minérales frittées, caractérisé en ce qu'il présente une porosité ouverte de 30 à 40% en volume et une résistance à l'écrasement, mesurée dans des conditions de compression isostatique, de $4.10^8$ à $5.10^8$ $N/m^2$.

2/ Matériau poreux selon la revendication 1, caractérisé en ce que sa résistance à la flexion est comprise entre 2,5 et $3,5.10^7$ $N/m^2$.

3/ Matériau poreux selon les revendications 1 ou 2, caractérisé en ce que le diamètre moyen de ses pores est compris entre 2 et 20 microns.

4/ Matériau poreux selon la revendication 2, caractérisé en ce qu'il présente une perméabilité à l'eau à 20°C allant de 0,6 à 60 $m^3/h.m^2$.bar pour une épaisseur de paroi de 1 cm lorsque le diamètre moyen de pore passe de 2 à 20 microns.

5/ Matériau poreux selon l'une des revendications 1 à 4, caractérisé en ce qu'il est composé d'un mélange d'oxydes métalliques comprenant plus de 20% en poids d'alumine.

6/ Matériau poreux selon l'une des revendications 1 à 4, caractérisé en ce qu'il est constitué d'alumine de pureté au moins égale à 99,9% en poids.

7/ Filtre tubulaire, caractérisé en ce qu'il comprend une couche épaisse poreuse formant couche support en un matériau selon l'une des revendications 1 à 6, et au moins une couche filtrante mince poreuse formée de particules minérales frittées entre elles et avec les surfaces interne ou externe de la couche support, les pores de la couche filtrante étant de diamètre inférieur à 10 microns et plus fins que ceux de la couche support, l'épaisseur radiale de chaque couche filtrante ne dépassant pas quelques dizaines de microns.

8/ Filtre tubulaire selon la revendication 7, caractérisé en ce que le diamètre moyen de pore de la couche présentant les pores les plus fins est d'environ 0,2 micron.

9/ Filtre tubulaire selon l'une des revendications 7 ou 8, caractérisé en ce que la couche support comprend au moins deux sous-couches de diamètres de pores différents, réunies par frittage, la sous-couche présentant les pores les plus fins étant disposée entre la ou les couches filtrantes et l'autre sous-couche.

10/ Filtre tubulaire selon l'une des revendications 7 à 9, caractérisé en ce que le rapport de son diamètre externe à son épaisseur radiale est compris entre 4 et 20.

11/ Filtre tubulaire selon l'une des revendications 7 à 10, caractérisé en ce que sa résistance à la pression interne passe de 30 bars à 240 bars lorsque le rapport du diamètre externe à l'épaisseur radiale passe de 20 à 4.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 150 390  (MONTECATINI EDISON SpA) <br> * revendications 1,5,6,8; page 6, lignes 23-30; exemples 1,6,7; page 5, lignes 24-27 * | 1,3,5-7,9,10 | C 04 B   38/00 <br> B 01 D   39/20 <br> B 01 D   13/04 |
| | --- | | |
| A | FR-A-2 463 636  (COMM. A L'ENERGIE ATOMIQUE) <br> * revendications 1,4; exemple I * | 1,3,5-8,10 | |
| | --- | | |
| A | FR-A-2 502 508  (GECERAL) <br><br> * revendications 1-5; page 4, ligne 36 - page 5, ligne 31; page 6, lignes 9-12; exemple 1 * | 1,3,5,7,8,10 | |
| | --- | | |
| A | FR-A-2 327 090  (COMM. A L'ENERGIE ATOMIQUE) <br> * revendications 1-3,5; page 4, ligne 25 - page 5, ligne 26 * | 1,5-7,10 | DOMAINES TECHNIQUES RECHERCHES (Int. Cl.4) |
| | --- | | |
| A | FR-A-2 177 881  (MONTECATINI EDISON SpA) <br> * revendications 1,5; exemples 1,2 * | 1,3,5-7,10 | B 01 D <br> C 04 B |
| | --- | | |
| A | GB-A-  860 099  (A.B. ATOMENERGI) <br> * page 3, lignes 25-56; page 4, lignes 58-67 * | 1,5,6 | |
| | ---          -/- | | |

Le présent rapport de recherche a été établi pour toutes les revendications

| Lieu de la recherche <br> LA HAYE | Date d'achèvement de la recherche <br> 30-11-1984 | Examinateur <br> HOORNAERT P.G.R.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

0143325

Numéro de la demande

EP  84 11 2746

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. CI.4) |
|---|---|---|---|
| A | FR-A-2 250 633  (SUMITOMO ELECTRIC IND. LTD.) <br> * page  1,  lignes 1-28; page 7, ligne 17 - page 9, ligne 28; page 12, ligne 24 - page 13, ligne 25; figures 1,2a,2b * | 1,3,5-7,10 | |
| | --- | | |
| A | FR-A-2 380 999  (MONTEDISON SpA) <br> * revendications 1,5; exemple 1; tableau I * | 1,5,6 | |
| | ----- | | |

DOMAINES TECHNIQUES RECHERCHES (Int. CI.4)

Le présent rapport de recherche a été établi pour toutes les revendications

| Lieu de la recherche | Date d'achèvement de la recherche | Examinateur |
|---|---|---|
| LA HAYE | 30-11-1984 | HOORNAERT P.G.R.J. |